# EUROPEAN PATENT APPLICATION

(11) **EP 1 513 330 A1**
(43) Date of publication of application: **09.03.2005**
(21) Application number: 03445099.9
(22) Date of filing: 08.09.2003
(51) Int. Cl.: H04M 1/725

(54) **Device with graphics dependent on the environment and method therefor**

(71) Applicant: Sony Ericsson Mobile Communications AB, 221 88 Lund (SE)
(72) Inventor: Foxenland, Eral, 254 41 Helsingborg (SE)
(74) Representative: Akerman, Marten Lennart

(57) **Abstract**

The invention relates to a device with graphics that depend on the environment, particularly a mobile device such as a mobile phone with graphics that change in dependence of signals registered by a camera. The invention also relates to a method for controlling changeable graphics of a graphical interface in such a device. Thus, the invention provides a device (1) comprising a display (2) for showing information (3) related to the operations of the device, a control unit for controlling the operations of the device including changeable graphics of a graphical interface of the display (2), and further comprising or being connectable to a camera. The control unit is adapted to receive picture information from the camera and using the picture information in order to affect the graphics.

## Description

### Field of the invention

The present invention relates to a device with graphics that depend on the environment, particularly a mobile device such as a mobile phone with graphics that change in dependence of signals registered by a camera. The invention also relates to a method for controlling changeable graphics of a graphical interface in such a device.

### State of the art

Many modern mobile telephones with big colour displays have themes or skins that give the user possibilities to set different graphical looks for the display. A certain number of themes, which is a set of bitmaps and colour settings together with animations, are acquired when the customer buys the phone but the customer can also create their own themes. Many new mobile phones have also a built-in or connected camera that may be used for taking pictures that then can be sent to others. For example the document US 6,137,525 shows an apparatus which has a camera for performing image input. The apparatus also includes a viewfinder type display. US 6,510,325 shows a convertible telephone with a built-in camera that can be used as a part of a video phone or to obtain and display graphics from a computer.

The graphics of the above-mentioned apparatuses is either static or can be changed actively by the user.

### Summary of the invention

The object of the present invention is to provide a device with enhanced graphics, particularly graphics that may be changed in dependence of the environment. The object is achieved by letting the device react to picture information received by a camera built-in or connected to the device. Thus, the graphics may be changed automatically or semi-controlled by the user.

In a first aspect the invention provides a device comprising a display for showing information related to the operations of the device, a control unit for controlling the operations of the device including changeable graphics of a graphical interface of the display, and further comprising or being connectable to a camera.

According to the invention, the control unit is adapted to receive picture information from the camera and using the picture information in order to affect the graphics.

In one embodiment, the picture information is associated with a still picture.

The still picture may be employed to affect a theme of the graphical interface, and to affect optical factors of the theme, such as colour settings, contrast, light intensity, shapes and sizes of icons, animation effects and bitmap shapes.

Preferably, the device is adapted to save said theme, and the device may be adapted to send said theme over the mobile telecommunication network or upload said theme on the Internet.

The still picture may also be employed to provide a background image.

The background image may be subjected to optical effects, such as filter effects.

Preferably, the effect level of the picture information is adjustable.

In one embodiment, the still picture is sampled on user demand.

In another embodiment, the still picture is sampled at time intervals, which the time intervals may be set by a user.

In another embodiment, the still picture is sampled in dependence of the picture received by the camera.

The still picture may be sampled each time after the received picture has gone blank.

Alternatively, still picture is sampled continuously.

The device may be a portable telephone, a pager, a communicator, a smart phone or an electronic organiser.

In one embodiment, the device is a portable telephone and is connectable to an external camera.

The device may be connectable to the external camera by means of a connection in a mobile telecommunication network.

In a second aspect the invention provides a method for controlling changeable graphics of a graphical interface in a device comprising a display for showing information related to the operations of the device, a control unit for controlling the operations of the device including the changeable graphics of the display, and further comprising or being connectable to a camera.

According to the invention, the control unit receives picture information from the camera and uses the picture information in order to affect the graphics.

In one embodiment, the picture information is associated with a still picture. The still picture may be employed to affect a theme of the graphical interface, and to affect optical factors of the theme, such as colour settings, contrast, light intensity, shapes and sizes of icons, animation effects and bitmap shapes.

Preferably, said theme is saved in the device, and said theme may be sent over the mobile telecommunication network or uploaded on the Internet.

In another embodiment, the still picture is employed to provide a background image.

The background image may be subjected to optical effects, such as filter effects.

Preferably, the effect level of the picture information is adjustable.

In one embodiment, the still picture is sampled on user demand.

In another embodiment, the still picture is sampled at time intervals, which time intervals may be set by a user.

In another embodiment, the still picture is sampled in dependence of the picture received by the camera.

The still picture may be sampled each time after the received picture has gone blank.

Alternatively, the still picture is sampled continuously.

The device may be connected to an external camera by means of a connection in a mobile telecommunication network.

### Brief description of the drawings

The invention will be described in detail below with reference to the drawing, of which the only figure is a schematic view of an embodiment of a device according to the invention and associated scenery.

### Detailed description of preferred embodiments

The purpose of the present invention is to achieve more interesting graphics, especially context dependent graphics, for instance in a mobile telephone. The invention is also applicable in other devices, generally all devices with a graphical user interface. Such devices include pagers, communicators, smart phones, electronic organisers and the like devices. The invention is best suited for handheld devices with reasonably large user interfaces, i.e. the liquid crystal display screen, high processor capability and a camera/viewfinder functionality.

The general functions and components of the device may be conventional and are not discussed here. Suffice it to say that the device includes a control unit having a processor controlling the usual operations of the device as well as the graphical interface of the display.

Themes, backgrounds and the entire user interface in mobile phones are becoming more and more graphically elaborate with a new generation of full colour displays. However, the graphics in today's mobile phones and other handheld devices are static and still not using many animated and lively effects. The graphics are controlled by the user in the sense that he can change themes, background picture etc, but the graphics do not interact with the user's environment. The present invention provides a more dynamic interface, semi-controlled by the user, which makes the mobile phone more lively. Many mobile phones have a built-in camera or are connectable to a camera for taking photos or video sequences. In one embodiment of the present invention the input from the camera is used to affect the interface. The camera provides picture signals that today are used for a viewfinder function. That is, the user uses the display of the mobile phone as viewfinder when taking photos. This pictures information is suitable for affecting the graphical interface of the device.

As used herein, a theme may comprise a set of colour settings, contrast, light intensity, shapes and sizes of icons, animation effects and bitmap shapes.

In one embodiment, the viewfinder picture is used to create a new theme for the display. Thus, the general aspect of the display resembles that of the surrounding environment as registered by the camera. For example, if the user is in a forest the colours could be dark and green, while if the user is at sea the dominant colour would be blue.

Also the picture information could be used to set a background of the display, such as a transparent or semi-transparent still picture of the environment.

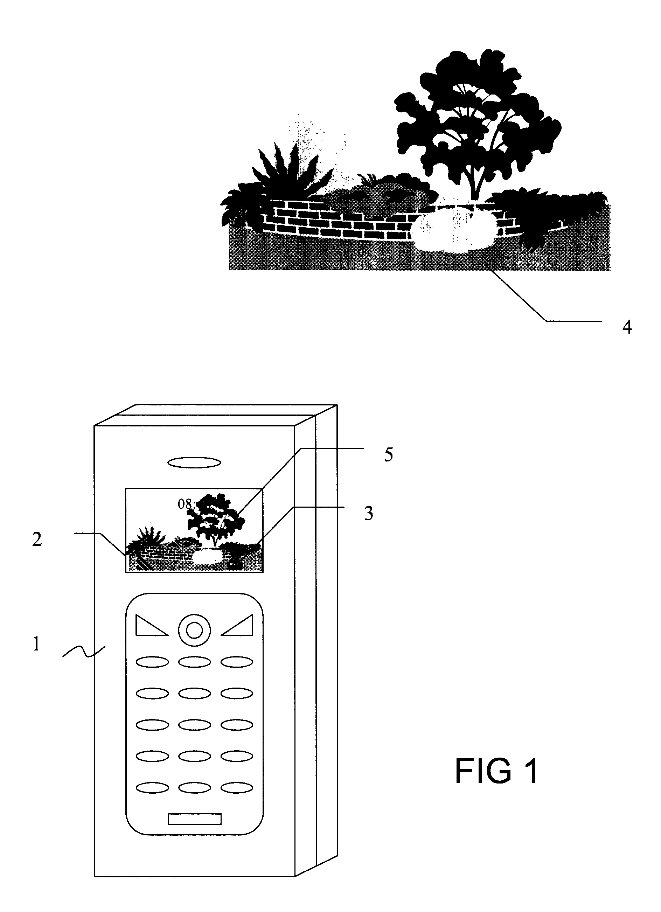

Fig. 1 shows such an embodiment. The device, such as a mobile telephone 1, includes a display to show the normal symbols and icons, such as battery symbol 3. The environment is represented by the scenery 4 of which the user may actively take a photograph. The camera lens is not shown, as it is usually located on the opposite side of the display 2. The scenery 4 is converted into a background picture 5 shown in the display.

In one embodiment the pictures information is treated to make it more interesting. For instance filters could be used to change the pictures. The user can choose filters in the same way as in an image processing program, such as filters that simulate a heat seeking camera and other filter effects, such as brush strokes, warps, blurs etc.

The user should be able to select when the still picture is applied to affect the graphics. In one mode the user actively takes a photo and freezes the background in that instant. In other words, the user samples the environment at will (on demand sampling) which is used to create a static theme (not excluding use of animations).

Themes can be saved in the device for as long as the user wishes for use later or sending to other users. Themes can for instance be sent through an MMS (Multimedia Message Service) over the mobile telecommunication network or uploaded on the Internet for sharing with other users.

The user may also set the device to automatically change the background at regular time intervals. The length of the time intervals is suitably set by the user. For example, the user can select that the device should change background every hour or every day or week etc.

The graphics could also be changed continuously. The display may resemble a viewfinder, such that the user always sees the camera viewfinder superimposed as a background. In this mode the device may be ready to take pictures or locked, as selected by the user. In practise, the viewfinder picture is not changed continuously but at very small time intervals.

In a further embodiment, it is possible to set the device such that the graphics is changed automatically in dependence of the pictures received from the camera. For example, if a user moves from one environment to another having e.g. a different light intensity or colour scheme, the device samples a new picture and uses it for affecting the graphics, such as colour settings, contrast, light intensity, shapes and sizes of icons, animation effects (e.g. animation speed and transitions) and bitmap shapes. The device may sample a picture automatically at intervals to detect if a change in environment has occurred. This can be performed continuously e.g. the maximum speed of change could be the same as in the viewfinder mode above. A special case is when the user puts down the phone on a table or in a bag so that the picture goes completely blank. When the user next time takes out the device the graphics will be changed automatically in dependence of the possibly new environment.

All these picture effects could be set to affect the entire background graphics or just parts of the graphics. For example, the symbols in the foreground could remain unaffected when the background changes, or the foreground could follow the changing background.

The update rate of the graphics can be adapted to the processor capabilities. Also, the effect level of the invention could be adjustable, e.g. between 0 (zero) and 100 per cent. At the level zero the graphics are not influenced at all, while a subtle influence is seen at e.g. 20 per cent and at 100 per cent the graphics are changed at full effect.

The camera used in the invention is normally the camera built in or integrated with the phone or a camera physically connected to the phone. However, all pictures received by the device could be used in the same way. For example, if the user receives a nice picture sent to him from another mobile phone, this picture could be used in the same way. The pictures could be sent through an MMS (Multimedia Message Service) over the mobile telecommunication network. Also, the device could be connected through the Internet to a computer that is connected to a camera, for instance a web camera. The web camera could thus be used as a remote camera in the same way as a built-in camera. Also, the device can receive complete themes through an MMS or via the Internet.

Thus, the invention provides a device and method that gives the user the possibility to create new static interfaces or a dynamically changing interface, the dynamic aspect making the interface change as the environment or context of the user changes. Instead of designing a theme with an image-processing program, the user can create it by exposing himself and his apparatus to a certain environment. The invention may be implemented by various combinations of hardware and software as will be appreciated by a person skilled in the art. The scope of the invention is only limited by the claims below.

## Claims

1. A device (1) comprising a display (2) for showing information (3) related to the operations of the device, a control unit for controlling the operations of the device including changeable graphics of a graphical interface of the display (2), and further comprising or being connectable to a camera, **characterised in that** the control unit is adapted to receive picture information (4) from the camera and using the picture information in order to affect the graphics.

2. A device according to claim 1, **characterised in that** the picture information is associated with a still picture.

3. A device according to claim 2, **characterised in that** the still picture is employed to affect a theme of the graphical interface.

4. A device according to claim 3, **characterised in that** the still picture is employed to affect optical factors of the theme, such as colour settings, contrast, light intensity, shapes and sizes of icons, animation effects and bitmap shapes.

5. A device according to claims 3 or 4, **characterised in that** the device is adapted to save said theme.

6. A device according to claim 5, **characterised in that** the device is adapted to send said theme over the mobile telecommunication network or upload said theme on the Internet.

7. A device according to any one of claims 2 to 6, **characterised in that** the still picture is employed to provide a background image (5).

8. A device according to claim 7, **characterised in that** the background image is subjected to optical effects, such as filter effects.

9. A device according to any one of claims 1 to 8, **characterised in that** the effect level of the picture information is adjustable.

10. A device according to any one of claims 2 to 9, **characterised in that** the still picture is adapted to be sampled on user demand.

11. A device according to any one of claims 2 to 9, **characterised in that** the still picture is adapted to be sampled at time intervals.

12. A device according to claim 11, **characterised in that** the time intervals are adapted to be set by a user.

13. A device according to any one of claims 2 to 9, **characterised in that** the still picture is adapted to be sampled in dependence of the picture received by the camera.

14. A device according to claim 13, **characterised in that** the still picture is adapted to be sampled each time after the received picture has gone blank.

15. A device according to any one of claims 2 to 9, **characterised in that** the still picture is adapted to be sampled continuously.

16. A device according to any one of claims 1 to 15, **characterised in that** the device is a portable telephone, a pager, a communicator, a smart phone or an electronic organiser.

17. A device according to claim 16, **characterised in that** the device is a portable telephone and is connectable to an external camera.

18. A device according to claim 17, **characterised in that** the device is connectable to the external camera by means of a connection in a mobile telecommunication network.

19. A method for controlling changeable graphics of a graphical interface in a device (1) comprising a display (2) for showing information (3) related to the operations of the device, a control unit for controlling the operations of the device including the changeable graphics of the display (2), and further comprising or being connectable to a camera, **characterised in that** the control unit receives picture information (4) from the camera and uses the picture information in order to affect the graphics.

20. A method according to claim 19, **characterised in that** the picture information is associated with a still picture.

21. A method according to claim 20, **characterised in that** the still picture is employed to affect a theme of the graphical interface.

22. A method according to claim 21, **characterised in that** the still picture is employed to affect optical factors of the theme, such as colour settings, contrast, light intensity, shapes and sizes of icons, animation effects and bitmap shapes.

23. A method according to claims 21 or 22, **characterised in that** said theme is saved in the device.

24. A method according to claim 23, **characterised in that** said theme is sent over the mobile telecommunication network or uploaded on the Internet.

25. A method according to any one of claims 20 to 24, **characterised in that** the still picture is employed to provide a background image (5).

26. A method according to claim 25, **characterised in that** the background image is subjected to optical effects, such as filter effects.

27. A method according to any one of claims 19 to 26, **characterised in that** the effect level of the picture information is adjustable.

28. A method according to any one of claims 20 to 27, **characterised in that** the still picture is sampled on user demand.

29. A method according to any one of claims 20 to 27, **characterised in that** the still picture is sampled at time intervals.

30. A method according to claim 29, **characterised in that** the time intervals are set by a user.

31. A method according to any one of claims 20 to 27, **characterised in that** the still picture is sampled in dependence of the picture received by the camera.

32. A method according to claim 31, **characterised in that** the still picture is sampled each time after the received picture has gone blank.

33. A method according to any one of claims 20 to 27, **characterised in that** the still picture is sampled continuously.

34. A method according to any one of claims 19 to 33, **characterised in that** the device is connected to an external camera by means of a connection in a mobile telecommunication network.
